# EUROPÄISCHE PATENTSCHRIFT

(11) **EP 0 906 206 B1**
(45) Veröffentlichungstag und Bekanntmachung des Hinweises auf die Patenterteilung: **10.04.2002**
(21) Anmeldenummer: 97933642.7
(22) Anmeldetag: 17.06.1997
(51) Int. Cl.: B60T 8/00, B60K 41/20, B60G 17/015

(54) **VERFAHREN ZUR REGELUNG DES FAHRVERHALTENS EINES FAHRZEUGS MIT REIFENSENSOREN**
METHOD FOR ADJUSTING THE DRIVING PERFORMANCE OF A MOTOR VEHICLE USING TYRE SENSORS
PROCEDE POUR REGULER LA TENUE DE ROUTE D'UN VEHICULE A L'AIDE DE CAPTEURS MONTES SUR LES PNEUMATIQUES

(30) Priorität: 21.06.1996 DE 19624795
(43) Veröffentlichungstag der Anmeldung: 07.04.1999
(73) Patentinhaber: Continental Teves AG & Co. oHG, 60488 Frankfurt (DE)
(72) Erfinder: LATARNIK, Michael, D-61381 Friedrichsdorf (DE); FENNEL, Helmut, D-65812 Bad Soden (DE)
(74) Vertreter: Blum, Klaus-Dieter
(86) Internationale Anmeldenummer: EP9703139
(87) Internationale Veröffentlichungsnummer: WO9749586

(56) Entgegenhaltungen:
- EP-A- 0 325 298
- EP-A- 0 465 958
- EP-A- 0 476 372
- DE-A- 4 128 639
- DE-A- 4 321 571
- PATENT ABSTRACTS OF JAPAN vol. 096, no. 008, 30.August 1996 & JP 08 108834 A (NISSAN DIESEL MOTOR CO LTD), 30.April 1996,
- PATENT ABSTRACTS OF JAPAN vol. 012, no. 169 (M-699), 20.Mai 1988 & JP 62 283051 A (TOKICO LTD), 8.Dezember 1987,
- PATENT ABSTRACTS OF JAPAN vol. 017, no. 358 (M-1440), 7.Juli 1993 & JP 05 050914 A (TOYOTA MOTOR CORP), 2.März 1993,
- PATENT ABSTRACTS OF JAPAN vol. 017, no. 092 (M-1371), 23.Februar 1993 & JP 04 287753 A (TOYOTA MOTOR CORP), 13.Oktober 1992,
- PATENT ABSTRACTS OF JAPAN vol. 096, no. 008, 30.August 1996 & JP 08 099616 A (AISIN SEIKI CO LTD), 16.April 1996,
- PATENT ABSTRACTS OF JAPAN vol. 016, no. 282 (M-1269), 23.Juni 1992 & JP 04 071953 A (NISSAN MOTOR CO LTD), 6.März 1992,
- PATENT ABSTRACTS OF JAPAN vol. 016, no. 026 (M-1202), 22.Januar 1992 & JP 03 239673 A (TOYOTA MOTOR CORP), 25.Oktober 1991,

## Beschreibung

Die vorliegende Erfindung betrifft ein Verfahren zur Regelung des Fahrverhaltens eines Fahrzeugs gemäß dem Oberbegriff des Anspruchs 1.

Ein derartiges Verfahren ist beispielsweise aus der EP 0444109 B1 bekannt. In dieser Druckschrift wird ein Verfahren und eine Vorrichtung zur Erfassung von Reifenabdrücken, zu deren Umrechnung in auf die Reifen wirkende Kräfte und zur Verbesserung des Fahrverhaltens des Fahrzeuges beschrieben. Neben Reifensensoren, welche den Reifenlatsch erfassen, sind noch andere Sensoren wie z.B. Sensoren zur Erfassung der Radumfangsgeschwindigkeiten, des Lenkeinschlages der Räder, der Lage der Radaufhängungen sowie der Schwerpunktsbeschleunigung vorgesehen. Das Regelverfahren sieht vor, daß mittels der Reifenabdrucksensoren die Kräfte und Momente ermittelt werden, welche auf den jeweiligen Reifen einwirken. Diese ermittelten Kräfte und Momente werden dazu genutzt, zusammen mit der anderen Sensorik die Bewegung des Kraftfahrzeuges zu steuern. Aus der Druckschrift geht nicht hervor, welche physikalische Größe nun die tatsächliche Regelgröße des Verfahrens ist.

Bekannt ist es, beispielsweise eine Giermomentenregelung durchzuführen, bei welcher eine Sollgiergeschwindigkeit mit einer Istgiergeschwindigkeit verglichen wird und bei Abweichung der Istgiergeschwindigkeit von der Sollgiergeschwindigkeit diese Differenz in Steuersignale für bestimmte Stellelemente umgerechnet wird, durch deren Betätigung dann sich die Istgiergeschwindigkeit an die Sollgiergeschwindigkeit annähert. Wenn also gemäß Anspruch 6 der o.g. Druckschrift eine bestimmte physikalische Größe, beispielsweise die Umdrehungsgeschwindigkeit der Räder selektiv gesteuert werden soll, so ist anzunehmen, daß diese auch die Regelgröße ist.Die auf die Räder einwirkenden Kräfte müssen zunächst verarbeitet werden, um eine Sollgeschwindigkeit der Räder zu errechnen. Entsprechendes gilt für den Lenkeinschlag oder die Lage der Radaufhängungen der Räder. Jedes Mal werden die Signale der Reifenlatschsensoren in die jeweils zu regelnde physikalische Größe umgerechnet, um ein Fahrzeug-Istverhalten mit einem Fahrzeug-Sollverhalten zu vergleichen. Dies erfordert einen erheblichen Rechenaufwand, da die der Regelung zugrundeliegende physikalische Größe nicht direkt erfaßbar ist, sondern erst auf komplizierte Weise durch Umrechnung von Reifenlatschsignalen in Reifenkräfte und -momente und durch die weitere Verarbeitung in die physikalische Größe ermittelt werden können. Eine derartig komplizierte Verarbeitung von Signalen erfordert eine erhebliche Echtzeit, so daß eine lange Reaktionszeit bis zu einem Regeleingriff vergeht. Die physikalischen Istgrößen, die am Ende einer solchen komplizierten Rechnung resultieren, sind zu dem Zeitpunkt, in dem sie errechnet sind, schon nicht mehr aktuell: Die Regelgüte des Verfahrens leidet, da der nur verzögert vorgenommene Regeleingriff der aktuellen Fahrsituation unter Umständen nicht gerecht wird.

Die vorliegende Erfindung hat daher die Aufgabe, ein Verfahren zur Regelung des Fahrverhaltens eines Fahrzeugs gemäß dem Oberbegriff des Anspruchs 1 anzugeben, welches eine möglichst schnelle Reaktion auf ein kritisches Fahrverhalten mittels eines regelnden Eingriffs erlaubt.

Diese Aufgabe wird gelöst in Verbindung mit den kennzeichnenden Merkmalen des Anspruchs 1. Das Prinzip der vorliegenden Erfindung besteht in folgender Überlegung: Anhand der Reifensensoren können auf einfache Weise Kräfte und Momente in Längs-, Quer- und Vertikalrichtung errechnet werden. Eine Errechnung dieser Kräfte und Momente erfordert also nur geringe Zeit. Daher empfiehlt es sich, genau diese Kräfte auch als Regelgröße des Fahrverhaltens heranzuziehen, um auf dem direktesten Weg einen Regeleingriff vornehmen zu können.

Dabei kann es durchaus andere physikalische Größen geben, die zur Berechnung des Sollverhaltens des Fahrzeugs herangezogen werden. Die Sollvorgabe bestimmt immer in erster Linie die Richtung, auf welche die Regelgröße geregelt wird. Die Sollvorgabe kann daher eine größere Rechenschleife durchlaufen und muß nicht immer so hochaktuell sein, wie es für den Ist-Wert des Fahrverhaltens ratsam ist. Die Richtung, in welcher die Regelgröße geregelt wird, verändert sich mit der Zeit nicht so stark wie die den Fahrzustand charakterisierende Istgröße.

Aufgrund des erfindungsgemäßen Verfahrens ermittelte Sollkräfte in Längsrichtung oder auch in Querrichtung - z.B. bei Kurvenfahrt - können beispielsweise in Bremsdruckänderungen oder absolute Bremsdrücke umgerechnet werden. Bei hydraulischen Bremsanlagen kann auch eine Umrechnung in Ventilschaltzeiten oder bei der Verwendung von Proportionalventilen in Stromstärken erfolgen. Zur Regelung angetriebener Räder auf Sollkräfte hin kann auch Das Motorantriebsmoment variiert werden. Dabei bleiben aber die auf den Reifen wirkenden Kräfte immer die Regelgröße, nach welcher sich der Eingriff in die Radbremsen und/oder das Motorantriebsmoment richtet.

Zur Ermittlung von Sollkräften können die Istkräfte zusammen mit anderen Eingangsgrößen verarbeitet werden. Daß diese Rechnung eine längere Echtzeit erfordert, spielt aus den zuvor genannten Gründen keine Rolle in bezug auf die Regelgüte.

Bei einer Giermomentenregelung würde also ein erfindungsgemäßes Regelverfahren so aussehen, daß möglicherweise ein Sollgiermoment errechnet wird, jedoch kein Istgiermoment mittels eines Gierratensensors erfaßt wird. Ein Sollgiermoment wird im Gegenteil in Sollkräfte umgerechnet, welche an den jeweiligen Fahrzeugreifen angreifen müßten, wenn das Sollgiermoment mit dem Istgiermoment übereinstimmen würde. Danach werden dann die Istkräfte, welche an den Fahrzeugreifen angreifen, auf die Sollkräfte hin geregelt.

Bei einer elektronischen Bremskraftverteilung können beispielsweise die Istkräfte an den Vorderrädern dazu herangezogen werden, die Sollkräfte für die jeweiligen Hinterräder zu ermitteln.

Weitere, in die Ermittlung der Sollgrößen einfließende Eingangsgrößen könnten beispielsweise Einzelradgeschwindigkeiten und eine Fahrzeug-Referenzgeschwindigkeit sein, wobei diese entweder auf klassische Weise mittels Radsensoren erfaßt werden könnten oder aber auch durch eine entsprechende Gestaltung der Reifensensoren.

Eine nähere Erläuterung der Erfindung erfolgt nun durch die Beschreibung von zwei Ausführungsbeispielen in zwei Figuren.
- Fig. 1: zeigt eine Ausführung der Erfindung, welche der Giermomentenregelung dient.
- Fig. 2: zeigt eine Möglichkeit, die Erfindung zur elektronischen Bremskraftverteilung einzusetzen.

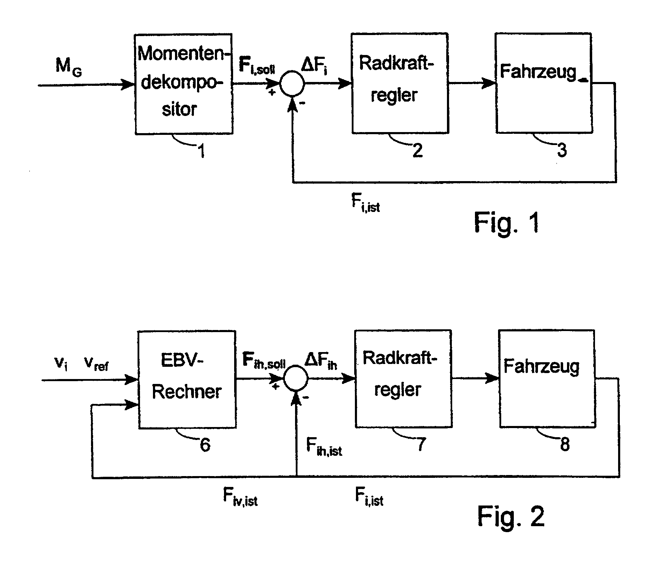

In Fig. 1 geht in einen Momentendekompositor ein Sollgiermoment M_{G} ein, welches auf nicht dargestellte Weise ermittelt wird. Der Momentendekompositor 1 ermittelt aus dem Sollgiermoment M_{G} Kräfte F_{i,soll}, welche von den einzelnen Fahrzeugreifen aufgebracht werden müssen, um das angegebene Sollgiermoment M_{G} zu erzielen. Hieraus ergeben sich zusammen mit den tatsächlich schon aufgebrachten Kräften F_{i,ist} Kräftedifferenzen ΔFᵢ, welche einem Radkraftregler 2 zugeführt werden. Der Radkraftregler kann nun anhand der einzustellenden Kräftedifferenzen Maßnahmen errechnen, die an den einzelnen Fahrzeugrädern durchzuführen sind.

Bei einer hydraulischen Bremsanlage kann das so aussehen, daß Druckdifferenzen, Absolutdrücke, Ventilschaltzeiten oder auch Stromstärken für Proportionalventile ermittelt werden. Für angetriebene Räder kann aus den Kräftedifferenzen eine Änderung des Antriebsmomentes berechnet werden. Die so errechneten Maßnahmen werden am Fahrzeug 3 durchgeführt und führen zu neuen, aktualisierten Istkräften F_{i,ist}.

Ein in diesem Regelkreis gemäß Fig. 1 einzuspeisendes Sollgiermoment kann auf herkömmliche Weise mittels üblicher Sensorik beispielsweise mit der Hilfe eines Lenkwinkelsensors und mit einer ermittelten Fahrzeug-Referenzgeschwindigkeit berechnet werden. Es können aber auch zur Ermittlung des Sollgiermomentes M_{G} die durch Reifensensoren gemessenen einzelnen Kräfte F_{i,ist} an dem Reifen herangezogen werden.

Wesentlich ist, daß die Sensorsignale F_{i,ist} unmittelbar im Radkraftregler 2 umgerechnet werden in Maßnahmen, welche am Fahrzeug 3 angewendet werden. Hierdurch ergibt sich eine kürzestmögliche Rechenzeit zum Eingriff in das Fahrzeug und somit ein verbessertes Fahrverhalten durch die verkürzte Reaktionszeit in diesem Regelkreis. Die Berechnung des Sollgiermomentes M_{G} kann dabei durchaus längere Zeit in Anspruch nehmen, da eine Sollwertvorgabe in erster Linie die Richtung der Regelung bestimmt. Viel aktueller muß die Darstellung des tatsächlichen Fahrzustandes sein. Dies ist durch die Erfindung in idealer Weise gegeben.

Fig. 2 zeigt die Möglichkeit, anhand der Erfindung eine elektronische Bremskraftverteilung am Fahrzeug vorzunehmen. Eine elektronische Bremskraftverteilung dient dem Zweck, mittels einer elektronischen Bremsdruckregelung an den Hinterachsbremsen ein Blockieren der Hinterräder vor den Vorderrädern während einer pedalbetätigten Bremsung zu verhindern.

In den Rechner zur Ermittlung von auf die Hinterachsbremsen auszuübenden Sollkräften F_{ih,soll}, welcher hier kurz EBV-Rechner 6 heißt, fließen neben den an den Vorderrädern wirkenden Iskräften F_{iv,Ist} noch andere Eingangsgrößen ein, die hier als Einzelradgeschwindigkeiten vᵢ und als Fahrzeug-Referenzgeschwindigkeit v_{ref} angegeben sind. Es können anstelle dieser Signale auch andere einfließen, beispielsweise ein Lenkwinkelsignal, ein Querbeschleunigungssignal oder ähnliche Signale, welche eine Kurvenfahrt anzeigen. Im übrigen können diese Informationen über die zusätzlichen Eingangsgrößen auch von Reifensensoren herrühren, die in geeigneter Weise ausgestaltet sind.

Der EBV-Rechner 6 ermittelt also Kräfte, welche von den Hinterrädern aufgebracht werden sollen. Diese werden in Bezug gesetzt zu den tatsächlich schon an den Reifen der Hinterräder angreifenden Istkräfte F_{ih,ist}. Die somit ermittelten einzustellenden Kräftedifferenzen an den Hinterrädern ΔFᵢₕ gehen an den Radkraftregler 7 weiter, welcher ähnlich dem Radkraftregler 2 Maßnahmen errechnet, welche zur Einstellung der Kräftedifferenzen ΔFᵢₕ ergriffen werden müssen. Allerdings errechnet der Radkraftregler 7 zur elektronischen Bremskraftverteilung lediglich Eingriffe auf die Hinterräder des Fahrzeugs 8. Nach Vornahme dieser Eingriffe ergeben sich demnach neue Kräfteverhältnisse an den einzelnen Fahrzeugreifen F_{i,ist}. Diese fließen in die weitere Regelung ein.

Auch hier gilt, daß die Regelgröße zur Einstellung einer optimalen elektronischen Bremskraftverteilung stets die an den Hinterrädern wirkenden Kräfte sind. Die den Istzustand des Fahrzeugs charakterisierenden Kräfte F_{i,ist} können also unmittelbar verarbeitet werden. Lediglich die Sollwertbestimmung durchläuft eine größere Schleife, was aus zuvor genannten Gründen aber nicht kritisch ist.

Durch die Erfindung läßt sich also ein sogenannter Kaskadenregler verwirklichen, welcher einen sehr schnellen Eingriff in den aktuellen Fahrzustand des Fahrzeuges ermöglicht.

## Patentansprüche

1. Verfahren zur Regelung des Fahrverhaltens eines Fahrzeugs, wobei zur Ermittlung von auf die einzelnen Räder wirkenden Kräfte (F_{i,ist}) Reifensensoren eingesetzt sind, **dadurch gekennzeichnet, daß** die auf die Reifen wirkenden Kräfte (F_{i,ist}) die Regelgröße eines Regelkreises bilden.

2. Verfahren nach Anspruch 1, **dadurch gekennzeichnet, daß** eine Differenz zwischen ermittelten Sollkräften und den auf die Reifen wirkenden Kräften (F_{i,soll}) in Längsrichtung gebildet wird und diese Differenz in einzustellende Bremsdrücke oder Bremsdruckänderungen umgerechnet werden.

3. Verfahren nach Anspruch 1, **dadurch gekennzeichnet, daß** eine Differenz zwischen ermittelten Sollkräften und den auf die Reifen wirkenden Kräften (F_{i,soll}) gebildet wird und diese Differenz in Ventilschaltzeiten einer hydraulischen Bremsanlage umgerechnet werden.

4. Verfahren nach Anspruch 1, **dadurch gekennzeichnet, daß** eine Differenz zwischen ermittelten Sollkräften und den auf die Reifen wirkenden Kräften (F_{i,soll}) gebildet wird und diese Differenz in einzustellende Stromstärken zur Ansteuerung von Proportionalventilen umgerechnet werden.

5. Verfahren nach einem der vorhergehenden Ansprüche, **dadurch gekennzeichnet, daß** für angetriebene Räder eine Differenz zwischen ermittelten Sollkräften und den auf die Reifen wirkenden Kräften (F_{i,soll}) gebildet und diese Differenz in Änderungen des Motorantriebsmomentes umgerechnet wird.

6. Verfahren nach einem der vorhergehenden Ansprüche, **dadurch gekennzeichnet, daß** der Regelkreis einem zweiten Kreis unterlagert ist, der Istkräfte (F_{iv,ist}) zusammen mit anderen, eine aktuelle Fahrsituation charakterisierenden Eingangsgrößen (vᵢ, v_{ref}) zu Sollkräften (F_{ih,soll}) umrechnet.

7. Verfahren nach einem der vorhergehenden Ansprüche, **dadurch gekennzeichnet, daß** zur Giermomentenregelung ein ermitteltes Sollgiermoment (M_{G}) in an den Fahrzeugreifen angreifende Sollkräfte (F_{i,soll}) umgerechnet wird und diese Sollkräfte (F_{i,soll}) in den Regelkreis einfließen.

8. Verfahren nach Anspruch 6 oder 7, **dadurch gekennzeichnet, daß** die Istkräfte (F_{i,ist}) an den Vorderrädern, _{(Fiv,ist}) dazu herangezogen werden, die Sollkräfte (F_{ih,soll}) an den Hinterrädern zu ermitteln.

9. Verfahren nach Anspruch 6, 7 oder 8, **dadurch gekennzeichnet, daß** die anderen Eingangsgrößen die Einzelradumfangsgeschwindigkeiten (vᵢ) und eine Fahrzeug-Referenzgeschwindigkeit (v_{ref}) einschließen.

10. Verfahren nach Anspruch 9, **dadurch gekennzeichnet, daß** auch diese Eingangsgrößen aus Reifensensorsignalen abgeleitet werden.

## Claims

1. Method of controlling the driving performance of a vehicle, wherein tire sensors are used to determine forces (F_{i,ist}) which act on the individual wheels,
**characterized in that** the forces (F_{i,ist}) which act on the tires represent the control quantity of a control circuit.

2. Method as claimed in claim 1,
**characterized in that** a difference between nominal forces determined and the forces (F_{i,soll}) which act on the tires in a longitudinal direction is produced and this difference is converted into brake pressures or brake pressure variations to be adjusted.

3. Method as claimed in claim 1,
**characterized in that** a difference between nominal forces determined and the forces (F_{i,soll}) which act on the tires is produced and this difference is converted into valve actuation times of a hydraulic brake system.

4. Method as claimed in claim 1,
**characterized in that** a difference between nominal forces determined and the forces (F_{i,soll}) which act on the tires is produced and this difference is converted into current intensities to be adjusted for driving proportional valves.

5. Method as claimed in any one of the preceding claims,
**characterized in that** a difference between nominal forces determined and the forces (F_{i,soll}) which act on the tires is produced for driven wheels and this difference is converted into variations of the engine drive torque.

6. Method as claimed in any one of the preceding claims,
**characterized in that** the control circuit underlies a second circuit which converts actual forces (F_{iv,ist}) together with other input quantities (vᵢ, v_{ref}) that are characteristic of a current driving situation into nominal forces (F_{ih,soll}).

7. Method as claimed in any one of the preceding claims,
**characterized in that**, for yaw torque control, a determined nominal yaw torque (M_{G}) is converted into nominal forces (F_{i,soll}) which act on the vehicle tires, and these nominal forces (F_{i,soll}) are introduced into the control circuit.

8. Method as claimed in claim 6 or claim 7,
**characterized in that** the actual forces (F_{i,ist}) on the front wheels (F_{iv,ist}) are taken into account for determining the nominal forces (F_{ih,soll}) on the rear wheels.

9. Method as claimed in claim 6, 7 or 8,
**characterized in that** the other input quantities include the individual wheel circumferential speeds (vᵢ) and a vehicle reference speed (v_{ref}).

10. Method as claimed in claim 9,
**characterized in that** also these input quantities are derived from tire sensor signals.

## Revendications

1. Procédé de régulation du comportement de conduite d'un véhicule, selon lequel des capteurs de pneumatique sont utilisés pour la détermination de forces (F_{i,ist}) s'exerçant sur les différentes roues, **caractérisé en ce que** les forces (F_{i,ist}) s'exerçant sur les pneumatiques constituent la grandeur de régulation d'un circuit de régulation.

2. Procédé suivant la revendication 1, **caractérisé en ce qu'**une différence entre des forces de consigne déterminées et les forces (F_{i,soll}) s'exerçant sur les pneumatiques est formée suivant la direction longitudinale et cette différence est transformée par le calcul en pressions de frein ou variations de pression de frein devant être réglées.

3. Procédé suivant la revendication 1, **caractérisé en ce qu'**une différence entre des forces de consigne déterminées et les forces (F_{i,soll}) s'exerçant sur les pneumatiques est formée et cette différence est transformée par le calcul en durées de commutation de valve d'un dispositif de freinage hydraulique.

4. Procédé suivant la revendication 1, **caractérisé en ce qu'**une différence entre des forces de consigne déterminées et les forces (F_{i,soll}) s'exerçant sur les pneumatiques est formée et cette différence est transformée par le calcul en intensités de courant, devant être réglées, servant à commander des valves proportionnelles.

5. Procédé suivant l'une des revendications précédentes, **caractérisé en ce que**, pour des roues motrices, une différence entre des forces de consigne déterminées et les forces (F_{i,soll}) s'exerçant sur les pneumatiques est formée et cette différence est transformée par le calcul en variations du couple d'entraînement moteur.

6. Procédé suivant l'une des revendications précédentes, **caractérisé en ce que** le circuit de régulation est subordonné à un second circuit qui transforme par le calcul des forces réelles (F_{iv,ist}), en commun avec d'autres grandeurs d'entrée (vᵢ, v_{ref}) caractérisant une situation de conduite actuelle, en forces de consigne (F_{ih,soll}).

7. Procédé suivant l'une des revendications précédentes, **caractérisé en ce que**, pour la régulation du couple de lacet, un couple de lacet de consigne (M_{G}) déterminé est transformé par le calcul en forces de consigne (F_{i,soll}) s'exerçant sur les pneumatiques du véhicule et ces forces de consigne (F_{i,soll}) entrent dans le circuit de régulation:

8. Procédé suivant la revendication 6 ou 7, **caractérisé en ce qu'**il est fait appel aux forces réel (F_{i,ist}) sur les roues avant (F_{iv,ist}) à l'effet de déterminer les forces de consigne (F_{ih,soll}) sur les roues arrière.

9. Procédé suivant la revendication 6, 7 ou 8, **caractérisé en ce que** les autres grandeurs d'entrée comprennent les vitesses périphériques de roue individuelles (vᵢ) et une vitesse de référence de véhicule (v_{ref}).

10. Procédé suivant la revendication 9, **caractérisé en ce qu'**également, ces grandeurs d'entrée sont déduites de signaux de capteur de pneumatique.
